# EUROPEAN PATENT APPLICATION

(11) **EP 4 769 685 A1**
(43) Date of publication of application: **01.07.2026**
(21) Application number: 24877510.8
(22) Date of filing: 08.10.2024
(51) Int. Cl.: H01M 50/124, H01M 50/105, H01M 50/159, H01M 50/16, H01M 50/131, H01M 50/126, H01M 50/211

(54) **POUCH-TYPE BATTERY CASE, AND LITHIUM SECONDARY BATTERY, BATTERY MODULE, AND BATTERY PACK COMPRISING POUCH-TYPE BATTERY CASE**

(30) Priority: 10.10.2023 KR 20230134684
(71) Applicant: LG Energy Solution, Ltd., Seoul 07335 (KR)
(72) Inventor: KANG, Gyung Soo, Daejeon 34122 (KR); LEE, Hyo Seo, Daejeon 34122 (KR); NA, Seon Hyeong, Daejeon 34122 (KR)
(74) Representative: Plasseraud IP
(86) International application number: PCT/KR2024/015318
(87) International publication number: WO 2025/079974

(57) **Abstract**

The present invention relates to a pouch-type battery case including a film laminate body in which a substrate layer; a gas barrier layer; and a sealant layer are stacked, the gas barrier layer includes aluminum and four or more transition metals, the transition metal is selected from the group consisting of Ti, V, Cr, Mn, Fe, Co, Ni, Zn, Zr, Nb, Mo, Hf, Ta, and W, and the gas barrier layer includes the aluminum and the four or more transition metals in a weight ratio of 1:0.20 to 1:5.0.

## Description

### TECHNICAL FIELD

This application claims priority from Korean Patent Application No. 10-2023-0134684, filed on October 10, 2023, the disclosure of which is incorporated by reference herein.

The present invention relates to a pouch-type battery case, a lithium secondary battery including the same, a battery module, and a battery pack.

### BACKGROUND ART

With technological development and increasing demand for an electric vehicle and an energy storage system (ESS), demand for a battery as a source of energy is rapidly increasing, and accordingly, research on a battery satisfying various requirements is being conducted.

For this lithium secondary battery, mainly a lithium-based oxide is used as a positive electrode active material, and a carbon material is used as a negative electrode active material, and in general, depending on the type of an electrolyte to be used, the lithium secondary battery is classified into a lithium ion battery, a lithium ion polymer battery, and a lithium polymer battery, and depending on the outer shape of the battery, the lithium secondary battery is also classified into a cylindrical, prismatic, and pouch-type secondary batteries. Representative examples, in terms of the shape of the battery, include a prismatic secondary battery and a pouch-type secondary battery, which are thin and applicable to products such as a mobile phone, and thus highly demanded.

Among these, attention is being focused on the pouch-type secondary battery which has no limitation in shape and size, and is easily assembled by heat fusion and adequate for manufacturing of a lightweight and thin cell in particular due to easy discharge of gas or liquid in case of abnormal behaviors.

Meanwhile, the lithium secondary battery may have a sudden rise of temperature in an electrode caused by thermal and physical factors. The thermal factor includes overcharge or overload occurring due to misuse and malfunction of a charger, and the physical factor includes, for example, external impact that causes damage on a separator, resulting in a contact between a negative electrode and positive electrode materials to cause internal short circuit, and in this case, the temperature of the electrode may suddenly increase. If the temperature in the electrode suddenly increases, the battery may turn to a very unstable state due to reaction of an electrolyte solution and lithium, generation of hydrogen and oxygen inside the battery, or the like, a solvent of the electrolyte decomposes to generate gas, and the decomposition gas of the solvent may ignite and lead to explosion of the battery. In particular, if swelling occurs in the pouch-type secondary battery, the surface area of the pouch increases, and the tensile stress occurs, causing the pouch case to stretch.

Therefore, additional supplementation is needed to improve safety of the pouch-type batteries.

### DISCLOSURE OF THE INVENTION

### TECHNICAL PROBLEM

A task of the present invention is to provide a pouch-type battery case which is excellent in strength and elongation, and excellent in thermal stability, and thus having excellent effects on safety from fire and thermal shielding.

Another task of the present invention is to provide a lithium secondary battery including the pouch-type battery case.

Another task of the present invention is to provide a battery module and a battery pack including the lithium secondary battery.

### TECHNICAL SOLUTION

To solve the above tasks, the present invention provides an electrode current collector, a lithium secondary battery including the same, a battery module, and a battery pack.
[1] The present invention provides a pouch-type battery case including a film laminate body in which a substrate layer; a gas barrier layer, and a sealant layer are stacked, wherein the gas barrier layer includes aluminum and four or more transition metals, the transition metal is selected from the group consisting of Ti, V, Cr, Mn, Fe, Co, Ni, Zn, Zr, Nb, Mo, Hf, Ta, and W, and the gas barrier layer includes the aluminum and the four or more transition metals in a weight ratio of 1:0.20 to 1:5.0.
[2] The present invention provides the pouch-type battery case of [1] above, wherein the substrate layer; the gas barrier layer; and the sealant layer are stacked in sequence.
[3] The present invention provides the pouch-type battery case of [1] or [2] above, wherein the gas barrier layer includes aluminum and four or more transition metals, and the transition metal is selected from the group consisting of Cr, Mn, Fe, Co, Ni, Zr, Nb, Mo, and W.
[4] The present invention provides the pouch-type battery case of any one of [1] to [3] above, wherein the gas barrier layer includes aluminum and four or more transition metals, and a difference in weight between transition metals included in the four or more transition metals is 15 wt% or less.
   The present invention provides the pouch-type battery case, wherein the gas barrier layer is an alloy of the aluminum and the four or more transition metals.
[5] The present invention provides the pouch-type battery case of any one of [1] to [4] above, wherein the gas barrier layer includes Al, Co, Cr, Fe, and Ni.
[6] The present invention provides the pouch-type battery case of any one of [1] to [5] above, wherein the gas barrier layer includes the aluminum and the four or more transition metals in a weight ratio of 1:0.25 to 1:4.0.
[7] The present invention provides the pouch-type battery case of any one of [1] to [6] above, wherein the gas barrier layer has a tensile strength of 1,000 MPa or greater.
[8] The present invention provides the pouch-type battery case of any one of [1] to [7] above, wherein the gas barrier layer has a melting temperature of 1,200 °C to 1,500 °C.
[9] The present invention provides the pouch-type battery case of any one of [1] to [8] above, wherein the substrate layer includes one or more selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber.
[10] The present invention provides a lithium secondary battery including an electrode assembly and a pouch-type battery case accommodating the electrode assembly, wherein the pouch-type battery case is the pouch-type battery case according to any one of [1] to [9] above.
[11] The present invention provides a battery module including the lithium secondary battery, described in [10] above, in plurality.
[12] The present invention provides a battery pack including the battery module, described in [11] above, in plurality.

### ADVANTAGEOUS EFFECTS

Since a film laminate body included in the pouch-type battery case according to the present invention has a gas barrier layer, containing aluminum and four or more transition metals, being stacked, excellent strength and elongation and excellent thermal stability may be achieved, and thus, fire safety and thermal-shielding effects may be exhibited, making it useful in preparation of a pouch-type lithium secondary battery.

### BRIEF DESCRIPTION OF THE DRAWINGS

FIG. 1 is a cross-sectional view schematically illustrating a film laminate body included in a pouch-type battery case according to the present invention.
FIG. 2 is a plan view of a lithium secondary battery including a pouch-type battery case.
FIG. 3 is an exploded diagram of the lithium secondary battery according to FIG. 2.

### MODE FOR CARRYING OUT THE INVENTION

The advantages and features of the present invention and methods of achieving them may become clear by referring to the embodiments described in detail below with the accompanying drawings. The present invention, however, is not limited to the embodiments disclosed below, but may be implemented in various different forms. The present embodiments are merely provided to ensure that the disclosure of the present invention is complete and to fully inform those of ordinary skill in the art to which the present invention pertains, and the present invention is only defined by the scope of the claims. Like reference symbols or numbers refer to the same components throughout the specification.

Unless otherwise defined, all terms (including technical and scientific terms) used in this specification may be used with meanings that can be commonly understood by those skilled in the art to which the present invention belongs. Also, terms defined in commonly used dictionaries are not to be interpreted ideally or excessively unless clearly specifically defined.

The terminology used herein is for describing embodiments and is not intended to limit the present invention. In this specification, the singular forms are intended to include the plural forms as well, unless the context clearly indicates otherwise. The term "comprises" and/or "comprising" used in this specification do not exclude the presence or addition of one or more other components.

In this specification, when a part includes a component, this does not mean that other components are excluded, but that it may further include other components unless specifically stated to the contrary.

In this specification, the term "A and/or B" means A or B, or A and B.

In this specification, "%" refers to wt% unless otherwise indicated.

The pouch-type battery case of the present invention includes a film laminate body in which a substrate layer; a gas barrier layer; and a sealant layer are stacked, wherein the gas barrier layer includes aluminum and four or more transition metals, the transition metal is selected from the group consisting of Ti, V, Cr, Mn, Fe, Co, Ni, Zn, Zr, Nb, Mo, Hf, Ta, and W, and the gas barrier layer includes the aluminum and the four or more transition metals in a weight ratio of 1:0.20 to 1:5.0.

The pouch-type battery case may be prepared by molding the film laminate body. At this time, the film laminate body may be a stack of a substrate layer; a gas barrier layer; and a sealant layer, and in particular, the stack is in the order of the substrate layer; the gas barrier layer; and the sealant layer.

### Substrate layer

The substrate layer is formed on the outermost layer of the pouch film laminate body to protect a secondary battery from external friction and collision. The substrate layer may be made of a polymer, and may thus electrically insulate an electrode assembly from the outside.

The substrate layer may be made of a material including one or more selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber. In particular, the substrate layer may be made of polyethylene terephthalate (PET), nylon, which have wear resistance and heat resistance, or a combination thereof.

The substrate layer may have a single-layer structure made of any one material. On the contrary, the substrate layer may also have a multi-layer structure formed of respective layers made of two or more materials.

The substrate layer may have a thickness of 5 µm to 50 µm, particularly of 7 µm to 40 µm, and more particularly of 25 µm to 38 µm. When the thickness of the substrate layer falls within the above ranges, external insulation may be excellent, and since the thickness of the entire pouch is not large, the energy density, compared to the volume of the secondary battery, may be excellent.

### Gas Barrier Layer

The gas barrier layer is stacked between the substrate layer and the sealant layer to secure mechanical strength of the pouch, block access of gas or moisture from the outside of the secondary battery, and to prevent electrolyte leakage from the inside of the pouch-type case.

The gas barrier layer included in the pouch-type battery case of the present invention may include aluminum and four or more transition metals, and the transition metal may be selected from the group consisting of titanium (Ti), vanadium (V), chrome (Cr), manganese (Mn), iron (Fe), cobalt (Co), nickel (Ni), zinc (Zn), zirconium (Zr), niobium (Nb), molybdenum (Mo), hafnium (Hf), thallium (Ta), and tungsten (W). In the present invention, since the gas barrier layer includes aluminum in combination with four or more transition metals, the gas barrier layer may have excellent strength and elongation, and also have excellent thermal stability, compared with a conventional aluminum thin film or a general aluminum alloy thin film.

According to an embodiment of the present invention, the gas barrier layer may include aluminum and four or more transition metals, and the transition metal may be selected from the group consisting of chrome (Cr), manganese (Mn), iron (Fe), cobalt (Co), nickel (Ni), zirconium (Zr), niobium (Nb), molybdenum (Mo), and tungsten (W). In a case where the transition metal is four or more selected from the group consisting of chrome (Cr), manganese (Mn), iron (Fe), cobalt (Co), nickel (Ni), zirconium (Zr), niobium (Nb), molybdenum (Mo), and tungsten (W), more excellent strength and elongation may be achieved, and excellent thermal stability may be exhibited with a higher melting point.

Also, the gas barrier layer may be an alloy of the aluminum and the four or more transition metals. The gas barrier layer may be a high-entropy alloy including aluminum in combination with transition metals having thermal stability, which has excellent strength and high elongation, thereby having excellent moldability and exhibiting excellent thermal stability.

In addition, according to an embodiment of the present invention, the gas barrier layer may include Al, Co, Cr, Fe, and Ni, and in particular, the gas barrier layer may be an alloy of Al, Co, Cr, Fe, and Ni. In the case where the gas barrier layer includes Al, Co, Cr, Fe, and Ni, and is an alloy thereof, much more excellent strength, elongation, and thermal stability may be achieved. The alloy of Al, Co, Cr, Fe, and Ni, which is a high-entropy alloy, may have a melting point of about 1200 °C or higher that is significantly higher than 600 °C the general melting point of aluminum, and therefore, more excellent high-temperature stability may be exhibited.

According to an embodiment of the present invention, the gas barrier layer may include the aluminum and the four or more transition metals, and at this time, a difference in weight between transition metals constituting the four or more transition metals may be 15 wt% or less.

In particular, the difference in weight between the transition metals constituting the four or more transition metals may be 10 wt% or less, more particularly, 5 wt% or less, and alternatively, the four or more transition metals may have the same weight. For example, when the difference in weight of the transition metals constituting the four or more transition metals is 15 wt% or less, a difference in weight between the element having the largest weight and the element having the smallest weight among the transition metals, constituting the four or more transition metals, satisfies 15 wt% or less.

When the difference in weight between the transition metals, constituting the four or more transition metals included in the gas barrier layer, satisfies the above range, the four or more transition metals and the aluminum may easily form a high-entropy alloy together. In order for the four or more transition metals to alloy with the aluminum to form a multicomponent high-entropy alloy, each of the alloying elements, as the four or more transition metals, needs to be included in the similar amount.

According to an embodiment of the present invention, the gas barrier layer may include the aluminum and the four or more transition metals in a weight ratio of 1:0.20 to 1:5.0, particularly, in a weight ratio of 1:0.20 to 1:4.0, in a weight ratio of 1:0.20 to 1:3.50, in a weight ratio of 1:0.20 to 1:3.0, in a weight ratio of 1:0.22 to 1:4.0, in a weight ratio of 1:0.22 to 1:3.50, in a weight ratio of 1:0.22 to 1:3.0, in a weight ratio of 1:0.24 to 1:4.0, in a weight ratio of 1:0.24 to 1:3.50, or in a weight ratio of 1:0.24 to 1:3.0, and more particularly in a weight ratio of 1:0.25 to 1:2.50. When the gas barrier layer includes the aluminum and the four or more transition metals in the above weight ratios, excellent strength and elongation, required for the gas barrier layer, may be achieved, and also, excellent thermal stability may be achieved.

According to an embodiment of the present invention, the gas barrier layer may have a tensile strength of 1,000 MPa or greater, particularly, 1,000 MPa to 2,000 MPa, and more particularly, 1,100 MPa to 1,500 MPa. Since the gas barrier layer has excellent tensile strength as described above, despite internal and external pressure or collision of a sharp object, damage may not be present or reduced, so that the pouch-type battery case may have the advantage of maintaining the shape.

The gas barrier layer may have a thickness of 40 µm to 100 µm, particularly of 50 µm to 90 µm, and more particularly of 55 µm to 85 µm. When the thickness of the gas barrier layer falls within the above range, excellent moldability, when molding a cup part, and excellent gas-barrier performance may be exhibited.

### Sealant layer

The sealant layer is attached through thermal compression to seal the battery case, and positioned on the innermost layer of the pouch-type battery case.

Since the sealant layer is a surface to be in contact with an electrolyte and an electrode assembly after molded into the battery case, the sealant layer is required to have insulation and corrosion resistance, and since the movement of substances needs to be blocked between the inside and outside by sealing the inside completely, high sealing property is required.

The sealant layer may be made of a polymer material, which may be one or more selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, and Teflon, and particularly, among these, polypropylene (PP) which is excellent in mechanical property such as tensile strength, rigidity, surface hardness, wear resistance, heat resistance, etc., and chemical property such as corrosion resistance may be included.

More particularly, the sealant layer may include polypropylene, cast polypropylene (CPP), acid modified polypropylene, a propylene-butylene-ethylene copolymer, or a combination thereof.

The sealant layer may have a single-layer structure, and may have a multi-layer structure including two or more layers of different polymer materials.

The sealant layer may have a total thickness of 60 µm to 100 µm, preferably of 60 µm to 90 µm, and more preferably of 60 µm to 80 µm. When the thickness of the sealant layer is too small, sealing durability and insulation may decrease, and when the thickness is too large, flexibility may decrease, and the total thickness of the pouch film laminate body may increase, causing reduction of energy density compared to the volume.

The pouch-type battery case as described above may be prepared through a preparation method of a pouch-type battery case widely known in the art. For example, the pouch-type battery case of the present invention may be prepared through a method of attaching the substrate layer on an upper surface of the gas barrier layer by an adhesive, and forming the sealant layer on a lower surface of the gas barrier layer through coextrusion or an adhesion layer, and the pouch-type battery case may be prepared through a cup molding using the pouch film prepared as above, but the method is not limited thereto.

The pouch-type battery case according to the present invention may have a total thickness of 160 µm to 200 µm, and preferably 180 µm to 200 µm. When the thickness of the pouch-type battery case falls within the above ranges, reduction of a space for accommodating the battery due to the increase in thickness of the battery case, decrease in sealing durability, etc. may be minimized, and at the same time, the molding depth may be increased.

### Lithium Secondary Battery

According to another embodiment of the present invention, a lithium secondary battery, including the pouch-type battery case previously described; and an electrode assembly accommodated in the pouch-type battery case, is provided.

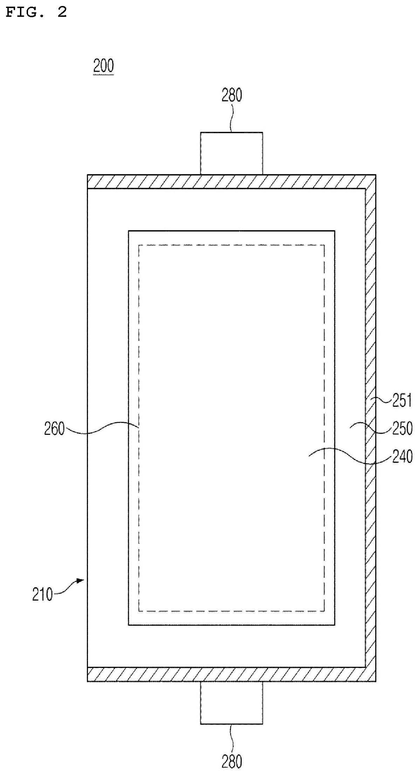

FIG. 2 illustrates an example of the lithium secondary battery 200 including the pouch-type battery case 210 according to an embodiment of the present invention.

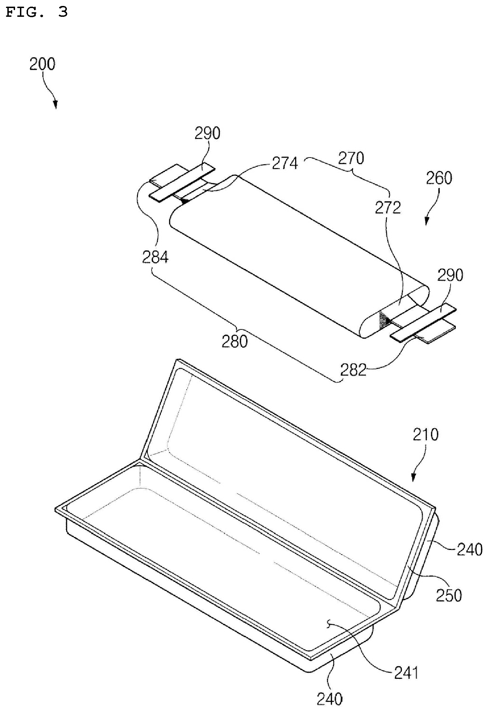

The pouch-type battery case 210 may include a cup part 240 having a recessed shape to accommodate the electrode assembly 260; and a sealing part 251 formed along a perimeter of the cup part 240. The sealing part 251 indicates the region marked with hatched patterns in FIG. 3, which may be positioned in a terrace part 250 and formed by the entire or a part of the terrace part 250 being sealed. In addition, the cup part 240 may have a recessed shape that is molded for the electrode assembly 260 to be accommodated, the electrode assembly may be electrically connected to an electrode tab, and the electrode tab may be electrically connected to an electrode lead 280 withdrawn to the outside.

FIG. 3 illustrates an exploded diagram of the lithium secondary battery 200, according to FIG. 2, including the electrode assembly 260 and the pouch-type battery case 210 accommodating the electrode assembly.

As illustrated in FIG. 3, the lithium secondary battery 200 according to the present invention may include the pouch-type battery case 210 and the electrode assembly 260 accommodated in the pouch-type battery case 210. The electrode assembly 260 may be formed by a stack of a positive electrode, a separator, and a negative electrode, and may include the electrode tab 270, the electrode lead 280, and a lead film 290. An electrolyte may be injected into the pouch-type battery case 210 where the electrode assembly 260 is accommodated, and then the terrace part 250 may be sealed to prepare the lithium secondary battery 200.

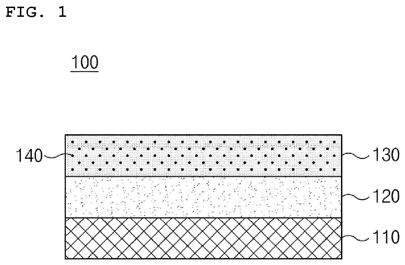

The pouch-type battery case 210 may accommodate the electrode assembly 260 therein. The pouch-type battery case 210 may be prepared by molding the pouch film laminate body 100 or 100a previously described with reference to FIGS. 1 and 2. Since specific components and property of the pouch film laminate body 100 or 100a are same as previously described, detailed description thereof is omitted.

In order to prepare the pouch-type battery case 210, the pouch film laminate body may be molded by drawing using a punch, etc., and may be stretched, thereby forming the cup part 240 including an accommodating space 241 in a pocket shape for accommodating the electrode assembly 260.

As illustrated in FIG. 3, the pouch-type battery case 210 may include an upper case and a lower case. In an embodiment, the lower case may have a lower cup part 240 which is formed to include the accommodating space 241 capable of accommodating the electrode assembly 260, and the upper case may cover the accommodating space 241 from above to prevent the electrode assembly 260 from falling outside of the battery case 210. The upper and lower cases may be prepared such that one side of each is connected to each other, but an embodiment of the present invention is not limited thereto, and the upper and lower cases may be prepared in various ways, for example, prepared separately from each other. Accordingly, the sealing part may be formed on three sides, or formed on all four sides, and it may be possible to include the cup part only in the lower case.

The pouch-type battery case 210 may be sealed in a state where the electrode assembly 260 is accommodated, so that a part of the electrode lead 280, which is a terminal part, is exposed. In particular, when the electrode lead 280 is connected to the electrode tab 270 of the electrode assembly 260, and the lead film 290 is formed on a part of the electrode lead 280, the electrode assembly 260 may be accommodated in the accommodating space 241 provided in the cup part 240 of the lower case, and the upper case may cover the accommodating space 241 from above. Next, the electrolyte may be injected into the accommodating space 241, and the terrace part 250, formed along the perimeters of the upper and lower cases, may be sealed. The electrolyte is to move lithium ions generated by electrochemical reaction of an electrode when the lithium secondary battery 200 is charged/discharged, and may include a non-aqueous organic electrolyte solution which is a mixture of a lithium salt and an organic solvent, or a polymer in which a polymer electrolyte is used. Furthermore, the electrolyte may include a sulfide-based, an oxide-based, or a polymer-based solid electrolyte, and this solid electrolyte may have flexibility that allows to be easily deformed by external force.

The electrode assembly 260 may be formed by an electrode and a separator being alternately stacked. In particular, a slurry in which an electrode active material, a binder, and/or a conductive material are mixed is applied onto a positive electrode current collector and a negative electrode current collector to prepare a positive electrode and a negative electrode, and the positive electrode and the negative electrode are stacked on one and the other sides of the separator to form the electrode assembly 260 in a certain shape. The electrode assembly 260 may be inserted in the pouch-type battery case 210 and is injected with the electrolyte, and then sealed by the pouch-type battery case 210. In an embodiment, the type of the electrode assembly 260 may include a stack type, a jelly roll type, a stack and folding type, etc., but the type is not limited thereto.

In an embodiment, the electrode assembly 260 may include two types of electrodes which are a positive electrode and a negative electrode, and a separator disposed between the electrodes in order to insulate the electrodes from each other. The positive electrode and the negative electrode may have structures where active material slurries are applied onto electrode current collectors respectively including aluminum and copper in a metal foil or metal mesh. In general, the slurry may be formed by the active material in particle form, an auxiliary conductor, a binder, and a conductive material being agitated with a solvent added. The solvent may be removed in the following process.

The electrode tab 270 may be connected to each of the positive electrode and the negative electrode of the electrode assembly 260, and may protrude from the electrode assembly 260 to the outside to serve as a movement path of electrons between the inside and outside of the electrode assembly 260. The electrode current collector of the electrode assembly 260 may include a portion applied with the electrode active material and an end portion not applied with the electrode active material that is a non-coated part. The electrode tab 270 may be formed by cutting the non-coated part, or formed by connecting a separate conductive member to the non-coated part through ultrasonic welding, etc. As illustrated in FIG. 3, the electrode tab 270 may protrude in different directions of the electrode assembly 260, but is not limited thereto, and may protrude in various directions, for example, protrude from one side in the same direction side by side.

The electrode lead 280 may supply electricity to the outside of the secondary battery 200. The electrode lead 280 may be connected to the electrode tab 270 of the electrode assembly 260 through spot welding, etc. At least a portion of the electrode lead 280 may be surrounded by an insulation part 290. In an embodiment, one end of the electrode lead 280 may be connected to the electrode tab 270, and the other end may protrude to the outside of the battery case 210. The electrode lead 280 may include a positive electrode lead 282 connected to one end of a positive electrode tab 272 and extending in a direction in which the positive electrode tab 272 protrudes, and a negative electrode lead 284 connected to one end of a negative electrode tab 274 and extending in a direction in which the negative electrode tab 274 protrudes.

The other end of each of the positive electrode lead 282 and the negative electrode lead 284 may protrude to the outside of the pouch-type battery case 210. Therefore, electricity generated inside the electrode assembly 260 may be supplied to the outside. In addition, since the positive electrode tab 272 and the negative electrode tab 274 protrude in different directions, the positive electrode lead 282 and the negative electrode lead 284 may also extend in different directions. In an embodiment, the positive electrode lead 282 and the negative electrode lead 284 may have different materials. That is, the positive electrode lead 282 may have an aluminum (Al) material same as that of the positive electrode current collector, and the negative electrode lead 284 may have a copper (Cu) material or a nickel (Ni)-coated copper material same as that of the negative electrode current collector. A portion of the electrode lead 280, protruding to the outside of the battery case 210, may become a terminal part, which may be electrically connected to an external terminal.

### (Positive Electrode)

The positive electrode current collector may include a highly conductive metal, and the metal is not particularly limited as long as it is non-reactive in a voltage range of a battery while a positive electrode active material layer is easily adhered thereto. Examples of the positive electrode current collector may include stainless steel, aluminum, nickel, titanium, calcined carbon, or aluminum or stainless steel that is surface-treated with carbon, nickel, titanium, silver, etc. In addition, the positive electrode current collector may generally have a thickness of 3 µm to 500 µm, and microscopic irregularities may be formed on a surface of the current collector to improve adhesion of the positive electrode active material. For example, the positive electrode current collector may be used in various forms including a film, a sheet, a foil, a net, a porous body, a foam body, a non-woven fabric body, etc.

The positive electrode active material layer may include, selectively as needed, a conductive material and a binder, together with the positive electrode active material.

At this time, the positive electrode active material may be included in an amount of 80 wt% to 99 wt%, and more particularly, 90 wt% to 98 wt% on the basis of the total weight of the positive electrode active material layer.

The conductive material may be used to impart conductivity to an electrode, and any material may be used in the battery, without particular limitation, as long as it does not cause chemical changes and conducts electrons. Specific examples may be graphite such as natural graphite or artificial graphite; a carbon-based material including carbon black, acetylene black, ketjen black, channel black, furnace black, lamp black, thermal black, a carbon fiber, etc.; a powder or fiber of metal including copper, nickel, aluminum, silver, etc.; a conductive tube including carbon nanotube, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included in an amount of 0.01 wt% to 10 wt%, preferably 0.1 wt% to 9 wt%, and more preferably 0.1 wt% to 5 wt% on the basis of the total weight of the positive electrode active material layer.

The binder serves to improve binding between the positive electrode active material particles and adhesion between the positive electrode active material and the current collector. Specific examples may be polyvinylidene fluoride (PVDF), a polyvinylidene fluoride-hexafluoropropylene copolymer (PVDF-co-HFP), polyvinylalcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, polyacrylic acid, and a polymer in which hydrogen thereof is substituted with Li, Na, or Ca, or various copolymers thereof, and any one alone or a mixture of two or more thereof may be used. The binder may be included in an amount of 1 wt% to 30 wt%, preferably 1 wt% to 20 wt%, and more preferably 1 wt% to 10 wt% on the basis of the total weight of the positive electrode active material layer.

The positive electrode may be prepared according to a general preparation method of a positive electrode. In particular, the positive electrode active material, and selectively as needed, a binder, a conductive material, and a dispersant may be dissolved or dispersed in a solvent to prepare a positive electrode slurry composition, and the positive electrode slurry composition may be applied onto the positive electrode current collector, and then dried and pressed to prepare the positive electrode.

The solvent may be a solvent generally used in the relevant art, including dimethyl sulfoxide (DMSO), isopropyl alcohol, N-methylpyrrolidone (NMP), dimethyl formamide (DMF), acetone, water, or the like, and any one alone or a mixture of two or more thereof may be used. The amount of the solvent used is sufficient if it dissolves or disperses the positive electrode active material, the conductive material, the binder, and the dispersant in consideration of the thickness of the slurry to be applied and the manufacturing yield, and provides a viscosity that allows excellent thickness uniformity upon application for preparation of the positive electrode thereafter.

Also, in another method, casting of the positive electrode slurry composition may also be performed on a separate support, and a film separated from the support may then be laminated onto the positive electrode current collector to thereby prepare the positive electrode.

### (Separator)

The separator separates the negative electrode and the positive electrode and provides a movement path of lithium ions, any separator generally used for a lithium secondary battery may be used without particular limitation, and particularly, a separator having low resistance to ion movement in an electrolyte and having excellent electrolyte solution moisture-absorbing ability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high meting point, polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

### (Electrolyte)

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and the type is not limited thereto.

In particular, the electrolyte may include an organic solvent and a lithium salt.

Any organic solvent may be used as the organic solvent, without particular limitation, as long as it may serve as a medium through which ions involved in an electrochemical reaction of the battery may move. In particular, as the organic solvent, an ester-based solvent including methyl acetate, ethyl acetate, γ-butyrolactone, ε-caprolactone, etc.; an ether-based solvent including dibutyl ether, tetrahydrofuran, or the like; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), ethylmethylcarbonate (EMC), ethylenecarbonate (EC), propylene carbonate (PC), etc.; an alcohol-based solvent including ethylalcohol, isopropyl alcohol, etc.; nitriles including R-CN (where, R is a linear, branched, or cyclic C2 to 20 hydrocarbon group, and may include a double-bond aromatic ring or an ether bond), etc.; amides including dimethylformamide, etc.; dioxolanes including 1,3-dioxolane, etc.; or sulfolanes may be used. Among these, a carbonate-based solvent is preferred, and a mixture of a cyclic carbonate (for example, ethylene carbonate, propylene carbonate, or the like) having high ionic conductivity and high dielectric constant capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, negative ions of the lithium salt may be one or more selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAl0₄, LiAlCl₄, LiCF₃SO₃, LiC₄F₉SO₃ LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used in a concentration range of 0.1 M to 4.0 M, preferably 0.5 M to 3.0 M, and more preferably 1.0 M to 2.0 M. When the concentration of lithium salt falls within the above ranges, the electrolyte may have appropriate conductivity and viscosity, and therefore, excellent performance of the electrolyte may be exhibited, and lithium ions may move effectively.

In addition to the electrolyte components, at least one additive, for example, a halo-alkylene carbonate-based compound such as difluoro ethylene carbonate, pyridine, triethylphosphite, triethanolamine, cyclic ether, ethylene diamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in order to improve lifetime characteristics of the battery, suppress the reduction in battery capacity, and improve discharge capacity of the battery. At this time, the additive may be included in the amount of 0.1 to 10.0 wt% on the basis of the total weight of the electrolyte.

### (Negative Electrode)

The negative electrode includes a negative electrode current collector, and a negative electrode active material layer positioned on the negative electrode current collector.

The negative electrode current collector is not particularly limited as long as it does not cause chemical changes to a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 µm to 500 µm, and like the positive electrode current collector, microscopic irregularities may be formed on a surface of the current collector to strengthen binding force of the negative electrode active material. For example, the current collector may be used in various forms including a film, a sheet, a foil, a net, a porous body, a foam body, a non-woven fiber body, etc.

The negative electrode active material layer includes, selectively, a binder and a conductive material, together with the negative electrode active material.

A compound capable of reversible intercalation and deintercalation of lithium may be used as the negative electrode active material. Specific examples may be a carbon-based material including artificial graphite, natural graphite, graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping or dedoping lithium such as SiOβ(0<β<2), SnO₂, vanadium oxide, and lithium vanadium oxide; or a composite containing the metal-based compound and the carbon-based material such as a Si-C composite or a Sn-C composite, and any one or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include non-shape, plate-shaped, flake-shaped, sphere-shaped, or fibrous natural graphite or artificial graphite, kish graphite, pyrolytic carbon, mesophase pitch based carbon fiber, meso-carbon microbeads, mesophase pitches, high-temperature calcined carbon such as petroleum or coal tar pitch derived cokes, and the like.

The negative electrode active material may be included in an amount of 80 wt% to 99 wt%, 82 wt% to 99 wt%, or 84 wt% to 99 wt% on the basis of the total weight of the negative electrode active material layer.

The binder is a component that aids binding between the conductive material, the active material, and the current collector, and generally is included in an amount of 0.1 wt% to 10 wt% on the basis of the total weight of the negative electrode active material layer. Examples of this binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, various copolymers thereof, etc.

The conductive material may be a component that further improves conductivity of the negative electrode active material, and may be included in an amount of 1 wt% to 30 wt%, 1 wt% to 20 wt%, or 1 wt% to 10 wt% on the basis of the total weight of the negative electrode active material layer. The conductive material may not be particularly limited as long as it does not cause chemical changes in the relevant battery and has conductivity, and for example, graphite such as natural graphite or artificial graphite; carbon black including acetylene black, ketjen black, channel black, furnace black, lamp black, thermal black, etc.; a conductive fiber including a carbon fiber, metal fiber, or the like; fluorocarbon; metal powder including aluminum power, nickel powder, etc.; a conductive whisker including zinc oxide, potassium titanate, etc.; a conductive metal oxide including titanium oxide, etc.; a conductive material including a polyphenylene derivative, etc. may be used.

The negative electrode active material, and selectively, the binder and the conductive material are dissolved or dispersed in a solvent to prepare a negative electrode slurry composition, and the negative electrode slurry composition is applied onto the negative electrode current collector, and dried to prepare the negative electrode active material layer, or casting of the negative electrode slurry composition is performed on a separate support, and a film separated from the support is then laminated onto the negative electrode current collector to thereby prepare the negative electrode active material layer.

Since the lithium secondary battery, according to the present invention, stably exhibits excellent discharge capacity, output characteristics, and capacity retention rate, etc., it is useful in the field of mobile devices, including a mobile phone, a laptop computer, a digital camera, etc., and in the field of electric vehicles including a hybrid electric vehicle (HEV), etc.

In particular, in order to use the battery for a longer period of time with a single charging of the battery, the battery is required to have high capacity, and for achieving the high capacity, large-area electrode technology is necessary. However, in a process of creating a large-area electrode, performance of the electrode may be reduced, and there is a risk of thermal propagation to another electrode due to thermal runaway in case of fire.

Accordingly, another embodiment of the present invention provides a battery module including the lithium secondary battery in plurality, and a battery pack including the battery module in plurality.

The battery module refers to a battery assembly where the lithium secondary batteries are grouped into a certain number to place in a frame in order to protect the lithium secondary batteries from external impact, heat, vibration, etc. The battery pack refers to a final form of a battery system to be fitted in an electric vehicle, etc.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

The battery module and battery pack, according to the present invention, may include the pouch-type battery case including the above-described film laminate body, and thus, safety against thermal propagation may be maximized in the event of an actual fire, and a high-capacity and large-area battery may be achieved.

Hereinafter, examples of the present invention will be described in detail so that those skilled in the art may easily carry out the present invention. However, the present invention may be implemented in several different forms, and is not limited to the examples to be described herein.

### Example and Comparative Example

### Example 1

### <Preparation of Pouch-Type Battery Case>

Powders (D₅₀, 25 µm) of Al, Co, Cr, Fe, and Ni were mixed in a weight ratio of 60:10:10:10:10, and the mixture was cold-sprayed to one side of a nylon film of 266 mm width, 50 m height, and 15 µm thickness using a cold spray (SH Korea) under conditions of a nozzle entrance voltage of 3 MPa and a temperature of 300 °C, and laminated to form a gas barrier layer having a thickness of 120 µm. Polyethylene terephthalate (PET) of 266 mm width, 50 m height, and 12 µm thickness was laminated on the other side of the nylon film to form a substrate layer including a PET film and a nylon film, and cast polypropylene (CPP) of 266 mm width, 50 m height, and 60 µm thickness was laminated to form a sealant layer, and a pouch film laminate body in a structure of polyethylene terephthalate/nylon/an alloy layer of Al, Co, Cr, Fe, and Ni/cast polypropylene was prepared.

The prepared pouch-type film laminate body was placed in a 2-cup molding instrument having a die and a punch, the punch was lowered at a pressure of 0.5 MPa and a speed of 20 mm/min to perform a drawing molding such that the molding depth became 9.6 mm, and a pouch-type battery case was prepared therefrom.

### <Preparation of Lithium Secondary Battery>

A positive electrode active material (NCM65 1520), a conductive material (Li-435), and a PVDF binder (KF9700, AD-c01) were mixed in N-methylpyrrolidone in a weight ratio of 96.5:1.5:2.0 to prepare a positive electrode slurry, and the positive electrode slurry was applied onto one side of an aluminum current collector, then dried at 140 °C, and then pressed to prepare a positive electrode.

In case of a negative electrode, a negative electrode active material in which natural graphite and artificial graphite were mixed in a ratio of 5:5, a conductive material, and a binder were mixed in a weight ratio of 95.6:0.9:3.4 to prepare the negative electrode.

A separator was disposed between the positive electrode and the negative electrode, prepared in the previously-described methods, to prepare an electrode assembly, then the electrode assembly was positioned inside the battery case according to the examples and comparative examples, and then an electrolyte solution was injected into the case to prepare a battery cell. LiPF₆ with a concentration of 0.7 M was dissolved in a mixed organic solvent of ethylene carbonate (EC): propylene carbonate (PC): ethyl methyl carbonate (EMC) mixed in a volume ratio of 2:1:7 to prepare the electrolyte solution.

### Example 2

A pouch-type battery case and a lithium secondary battery were prepared in the same method as that of Example 1, except that a mixture of powders (D₅₀ 25 µm) of Al, Co, Cr, Fe, and Ni mixed in a weight ratio of 70:7.5:7.5:7.5:7.5 was used when a gas barrier layer was formed.

### Example 3

A pouch-type battery case and a lithium secondary battery were prepared in the same method as that of Example 1, except that a mixture of powders (D₅₀ 25 µm) of Al, Co, Cr, Fe, and Ni mixed in a weight ratio of 80:5:5:5:5 was used when a gas barrier layer was formed.

### Example 4

A pouch-type battery case and a lithium secondary battery were prepared in the same method as that of Example 1, except that a mixture of powders (D₅₀ 25 µm) of Al, Co, Cr, Fe, and Ni mixed in a weight ratio of 40:15:15:15:15 was used when a gas barrier layer was formed.

### Example 5

A pouch-type battery case and a lithium secondary battery were prepared in the same method as that of Example 1, except that a mixture of powders (D₅₀ 25 µm) of Al, Co, Cr, Fe, and Ni mixed in a weight ratio of 30:17.5:17.5:17.5:17.5 was used when a gas barrier layer was formed.

### Example 6

A pouch-type battery case and a lithium secondary battery were prepared in the same method as that of Example 1, except that a mixture of powders (D₅₀ 25 µm) of Al, Co, Cr, Fe, Ni, and W mixed in a weight ratio of 50:10:10:10:10:10 was used when a gas barrier layer was formed.

### Comparative Example 1

A nylon film of 266 mm width, 50 m height, and 15 µm thickness and a polyethylene terephthalate film of 266 mm width, 50 m height, and 15 µm thickness were laminated on one side of an aluminum alloy thin film of 266 mm width, 50 m height, and 60 µm thickness, and cast polypropylene (CPP) of 266 mm width, 50 m height, and 50 µm thickness was laminated to prepare a pouch film laminate body in a structure of polyethylene terephthalate/nylon/an aluminum alloy thin film/a cast polypropylene.

A pouch-type battery case and a lithium secondary battery were prepared in the same method as that of Example 1, except that the above film laminate body was used.

### Comparative Example 2

A pouch-type battery case and a lithium secondary battery were prepared in the same method as that of Example 1, except that a mixture of powders (D₅₀ 25 µm) of Al, Co, Cr, and Fe mixed in a weight ratio of 60:13.3:13.3:13.3 was used when a gas barrier layer was formed.

### Comparative Example 3

A pouch-type battery case and a lithium secondary battery were prepared in the same method as that of Example 1, except that a mixture of powders (D₅₀ 25 µm) of Al, Co, Cr, and Ni mixed in a weight ratio of 60:13.3:13.3:13.3 was used when a gas barrier layer was formed.

### Comparative Example 4

A pouch-type battery case and a lithium secondary battery were prepared in the same method as that of Example 1, except that a mixture of powders (D₅₀ 25 µm) of Al, Co, Cr, Fe, and Ni mixed in a weight ratio of 84:4:4:4:4 was used when a gas barrier layer was formed.

### Comparative Example 5

A pouch-type battery case and a lithium secondary battery were prepared in the same method as that of Example 1, except that a mixture of powders (D₅₀ 25 µm) of Al, Co, Cr, Fe, and Ni mixed in a weight ratio of 10:22.5:22.5:22.5:22.5 was used when a gas barrier layer was formed.

### Experimental Example 1

The pouch-type battery cases prepared according to the examples and comparative examples were applied to the lithium secondary batteries to perform evaluation as below, and the results were listed in Table 1. Here, the experimental results were listed in Table 1 below. At this time, in Table 1, mark "⊚" refers to very good, mark "o" refers to good, mark "Δ" refers to moderate, and mark "×" refers to poor.

### 1) Fire Test

Five battery cells, prepared as above, were made into one module, and a heating pad was attached to one battery cell thereof to apply heat at a rate of 0.5 °C/sec. Whether ignition occurs in the battery cell with the heating pad attached was observed. At this time, the result was judged to be better as the first occurring of the ignition (fire or smoke) took longer, and the result was evaluated in four steps.

### 2) Thermal Propagation Delay Test

Five battery cells, prepared as above, were made into one module, and a heating pad was attached to one battery cell to apply heat at a rate of 0.5 °C/sec. A thermocouple was used to measure heat transferred to the adjacent cell, and whether there is a time delay for thermal propagation was observed, and the result was evaluated in four steps.

### 3) Penetration Test

A nail-penetration test was conducted to the battery cells prepared as above, such that the battery cells were penetrated with a sharp nail at a speed of 0.1 mm/s, and the result was evaluated in four steps with the time of initial ignition occurred, the size of flame when ignited, and the amount of smoke as a scale.

**[Table 1]**

| | Fire test | Thermal propagation delay test | Penetration test |
|---|---|---|---|
| Example 1 | Δ | Δ | ○ |
| Example 2 | Δ | Δ | ○ |
| Example 3 | Δ | Δ | ⊚ |
| Example 4 | ○ | Δ | Δ |
| Example 5 | ○ | Δ | Δ |
| Example 6 | Δ | Δ | ○ |
| Comparative Example 1 | × | × | × |
| Comparative Example 2 | Δ | Δ | Δ |
| Comparative Example 3 | Δ | Δ | Δ |
| Comparative Example 4 | × | × | ○ |
| Comparative Example 5 | Δ | Δ | Δ |

Referring to Table 1 above, the lithium secondary batteries including the pouch-type battery cases according to Examples 1 to 3 and 6 were evaluated as very good or good in the penetration test, and evaluated as moderate also in the fire test and thermal propagation delay test, and therefore, it can be seen that the lithium secondary batteries had a certain level of thermal resistance, and also had improved resistance to the occurrence of ignition and smoke when damaged physically by an external cause such as a nail. In addition, the lithium secondary batteries including the pouch-type battery cases according to Examples 4 and 5 were evaluated as good in the fire test, and also evaluated as moderate in the thermal propagation delay test and the penetration test, and therefore, it can be seen that the lithium secondary batteries had a certain level of thermal propagation delay effect and a certain level of resistance to the occurrence of ignition and smoke when damaged by an external cause such as a nail, and at the same time, had improved thermal resistance. On the contrary, the lithium secondary battery, including the pouch-type battery case containing the aluminum-alloyed gas barrier layer according to Comparative Example 1, performed poorly in all of the fire test, thermal propagation delay test, and the penetration test, and the lithium secondary battery, including the pouch-type battery case containing the gas barrier layer with Al and small amounts of four transition metals, according to Comparative Example 4, was evaluated as moderate in the penetration test, but evaluated as poor in the fire test and thermal propagation delay test, and therefore, it can be seen that the lithium secondary battery had poor thermal resistance. Through this, it can be seen that, in case of including Al and the four transition metals in the gas barrier layer, the lithium secondary battery had improved performance in the penetration test, but in case of including the four transition metals in smaller amounts than the amount of Al, effects of delaying the fire and thermal propagation were not achieved.

In addition, each of the lithium secondary batteries, according to Comparative Examples 2 and 3, included the pouch-type case containing the gas barrier layer having Al and three transition metals, the lithium secondary battery according to Comparative Example 5 included the pouch-type battery case containing the gas barrier layer having Al and large amounts of four transition metals, and these lithium secondary batteries were evaluated as moderate all in the fire test, thermal propagation delay test, and the penetration test, failing to exhibit improved performance in any one or more thereof. Through this, it can be seen that, in case of including Al and the four transition metals in the gas barrier layer as shown in Example 1, the lithium secondary battery exhibited more improved performance in the penetration test, compared to the case of including Al and three transition metals in the gas barrier layer as shown in Comparative Examples 2 and 3. Meanwhile, even in case of including Al and the four transition metals in the gas barrier layer, if the amount of the four transition metals were too large and the amount of Al became too small as shown in Comparative Example 5, the lithium secondary battery was evaluated as moderate in the penetration test, failing to achieve effect of improving the performance.

Through these results, it can be seen that, in case that Al and four or more transition metals were included, and the amount of Al increased beyond a certain ratio, the fire resistance was improved on nail penetration, in case that the amount of the four or more transition metals increased beyond a certain ratio, the resistance to a cell ignition caused by heating in the outside was improved, and in case that the ratio of Al and the four or more transition metals was out of an appropriate range, the improvement effect disappeared or was reduced. Furthermore, in a case where the lithium secondary battery was prepared by using the pouch-type battery case including the gas barrier layer containing Al and four or more transition metals in a predetermined content ratio, it can be seen that the lithium secondary battery may exhibit improved thermal resistance and resistance to physical damage.

### <Description of the Symbols>

| | | | |
|---|---|---|---|
| 100, 210: | pouch-type battery case | | |
| 110: | substrate layer | 120: | gas barrier layer |
| 130: | sealant layer | 200: | lithium secondary battery |
| 240: | cup part | 241: | accommodating space |
| 242: | planarization part | 243: | slope part |
| 250: | terrace part | 251: | sealing part |
| 260: | electrode assembly | 270: | electrode tab |
| 280: | electrode lead | 290 | lead film. |

## Claims

1. A pouch-type battery case comprising
a film laminate body in which a substrate layer; a gas barrier layer; and a sealant layer are stacked,
wherein the gas barrier layer includes aluminum and four or more transition metals,
the transition metal is selected from the group consisting of Ti, V, Cr, Mn, Fe, Co, Ni, Zn, Zr, Nb, Mo, Hf, Ta, and W, and
the gas barrier layer includes the aluminum and the four or more transition metals in a weight ratio of 1:0.20 to 1:5.0.

2. The pouch-type battery case of claim 1, wherein the substrate layer; the gas barrier layer; and the sealant layer are stacked in sequence.

3. The pouch-type battery case of claim 1, wherein the gas barrier layer comprises aluminum and four or more transition metals, and
the transition metal is selected from the group consisting of Cr, Mn, Fe, Co, Ni, Zr, Nb, Mo, and W.

4. The pouch-type battery case of claim 1, wherein the gas barrier layer comprises aluminum and four or more transition metals, and
a difference in weight between transition metals included in the four or more transition metals is 15 wt% or less.

5. The pouch-type battery case of claim 1, wherein the gas barrier layer is an alloy of the aluminum and the four or more transition metals.

6. The pouch-type battery case of claim 1, wherein the gas barrier layer comprises Al, Co, Cr, Fe, and Ni.

7. The pouch-type battery case of claim 1, wherein the gas barrier layer comprises the aluminum and the four or more transition metals in a weight ratio of 1:0.25 to 1:4.0.

8. The pouch-type battery case of claim 1, wherein the gas barrier layer has a tensile strength of 1,000 MPa or greater.

9. The pouch-type battery case of claim 1, wherein the gas barrier layer has a melting temperature of 1,200 °C to 1,500 °C.

10. The pouch-type battery case of claim 1, wherein the substrate layer comprises one or more selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber.

11. A lithium secondary battery, comprising
an electrode assembly, and a pouch-type battery case in which the electrode assembly is accommodated,
wherein the pouch-type battery case is the pouch-type battery case according to any one of claim 1 to claim 10.

12. A battery module comprising the lithium secondary battery, described in claim 11, in plurality.

13. A battery pack comprising the battery module, described in claim 12, in plurality.
